# EUROPEAN PATENT SPECIFICATION

(11) **EP 0 305 433 B1**
(45) Date of publication and mention of the grant of the patent: **03.05.1995**
(21) Application number: 88901974.1
(22) Date of filing: 12.01.1988
(51) Int. Cl.: D21H 13/40, D21F 11/02

(54) **METHOD FOR MANUFACTURING A MINERAL FIBRE PANEL**
VERFAHREN ZUR HERSTELLUNG EINES PANEELS AUS MINERALFASERN
PROCEDE DE FABRICATION D'UN PANNEAU DE FIBRES MINERALES

(30) Priority: 12.01.1987 US 2444
(43) Date of publication of application: 08.03.1989
(73) Proprietor: USG INTERIORS, Inc., Chicago, Illinois 60606-4385 (US)
(72) Inventor: IZARD, David, Graham, Wauconda, IL 60084 (US); ENGLERT, Mark, Howard, Buffalo Grove, IL 60089 (US)
(74) Representative: Johnson, Terence Leslie
(86) International application number: US8800158
(87) International publication number: WO8805097

(56) References cited:
- EP-A- 0 003 481
- US-A- 1 841 785
- US-A- 3 573 158
- US-A- 3 804 706
- US-A- 4 126 512

## Description

This invention relates to a method for making mineral products. More particularly, it relates to a method for making strong, structural panels of mineral wool and/or mineral aggregate that may vary from very lightweight (less than 8 pounds per cubic foot (128 kg/m³)) in one embodiment to densities up to about 20 pounds per cubic foot (320 kg/m³) or more in other embodiments. These panels may be used as acoustical ceiling tiles, thermal insulating panels, sound absorbing panels, pipe and beam insulation and the like products.

The water felting of dilute aqueous dispersions of mineral wool and lightweight aggregate is known. By such methods, a dispersion of mineral wool, lightweight aggregate, binder and other adjuvants are flowed onto a moving foraminous support wire screen for dewatering, such as that of an Oliver or Fourdrinier mat forming machine, at line speeds of about 10-50 feet (3-15m) per minute. The dispersion dewaters first by gravity and then vacuum suction means; the wet mat is dried over a number of hours in heated convection drying ovens; and the product is cut and optionally top coated, such as with paint, to produce lightweight structural panels such as acoustical ceiling products. Such methods cannot produce low density structural products below about 12 pounds per cubic foot (192 kg/m³) density. A "structural" panel, product by definition, is capable of supporting its own weight without visible sagging, bending, or collapsing when supported only at the edges of the panel, as in a suspended ceiling grid.

US-A-3,510,394 discloses flocculating inorganic kaolin clay in dilute dispersions of mineral fiber.

Flocculation is effected by adding extremely small amounts of flocculant such as polyacrylamide just before the slurry is dewatered, and the wet mat is baked or fired in addition to conventional drying. Dewatering time is increased by this flocculation treatment.

It is accordingly an object of the invention to seek to provide a method for manufacturing low density, structural, mineral fiber panels without having to dry extremely large amounts of water out of the wet mass over long periods of time.

A further object is to provide low density yet strong mineral panels having densities between about 3-10 pounds per cubic foot (48-160 kg/m³) and a modulus of rupture of at least about 30 pounds per square inch (0.2 MPa) for the core of the panel.

Another object is to provide mineral fiber and/or lightweight mineral aggregate structural panels which have excellent strength and integrity at densities up to about 20 pounds per cubic foot (320kg/m³) or more.

A still further object and advantage is the provision of a method for manufacturing lightweight mineral fiber panels wherein the dewatering and drying of the wet mat may be accomplished in a facile rapid manner such that the mat is dewatered and dried in a few minutes.

According to the invention there is provided a method for manufacturing a lightweight structural mineral panel having a thickness in the range about 0.3cms - 5.0 cms on a moving foraminous support wire which comprises the steps of:
A. Forming a dilute furnish in water of anionically stabilized resin latex and a mineral material selected from the group consisting of mineral fiber and mixtures of mineral fiber and mineral aggregate whereby said furnish contains by weight (dry solids) mineral fiber in the range 30-95%;
B. Mixing said furnish and from 0.5 to 15% by weight of resin latex solids of a cationic coupling agent sufficient to coat the mineral material and effectively couple the anionically stabilized resin latex onto the mineral surfaces;
C. Depositing the furnish on a water flooded section of the support wire and forming an open, wet entangled structure of mineral material and binder solids having water in intersticial spaces of the entangled structure;
D. Applying a vacuum pressure differential equivalent to 8 - 20 inches of mercury (27016 - 67540 Pa) to the wet structure sufficient to strip water from the mass without collapse of the open entangled structure of the wet mass;
E. Stripping additional water from the wet mass without collapse of the open entangled structure by applying further vacuum pressure differential equivalent to 5-70 inches of water (1245 - 17430 Pa) to the wet mass; and
F. Drying the wet mass by passing heated dry air through the mass without collapse of the open, entangled structure.

Using the invention it is possible to provide a dilute aqueous dispersion furnish or mineral fiber and/or lightweight mineral aggregate and a binder which is preferably an anionically-stabilized resin latex binder, such as a polyvinyl acetate. Almost at the end of mixing the dispersion is passed to a flooded section of a drainage wire of a foraminous mat forming apparatus.

According to a further aspect of the invention there is provided a method for manufacturing a lightweight structural mineral panel having a thickness in the range about 0.3 cms - 5.0 cms on a moving foraminous support wire which comprises the steps of:
a) forming a dilute furnish in water of anionically stabilized resin latex and a mineral fiber material whereby said furnish contains by weight (dry solids) mineral fiber in the range 30 - 95%;
b) mixing said furnish and from 0.5 to 15% by weight of resin latex solids of a cationic coupling agent sufficient to coat the mineral fiber material and effectively couple the anionically stabilized resin latex onto the mineral fiber surfaces;
c) depositing the furnish on a water flooded section of the support wire and forming an open, wet entangled structure of mineral fiber and latex resin binder solids having water in the intersticial spaces of the entangled structure;
d) applying a vacuum pressure differential equivalent to about 8-20 inches of Hg (27016-67450 Pa) to the wet structure sufficient to strip water from the mass without collapse of the open entangled structure of the wet mass; and
e) drying the wet mass by passing heated dry air through the mass and applying a vacuum pressure differential thereto without collapse of the open, entangled structure.

Also in the invention virtually all of the binder resin solids added to the system become coupled with coated mineral surfaces in the wet felted product, with very low losses of binder resin in the drainage section white water. Thus, the drainage water need not be recycled to avoid substantial losses of binder solids. By varying the proportions of lightweight aggregate in the particular method of felting, water stripping and drying of the panel products may be performed at various densities, ranging from about 3 to about 20 pounds per cubic foot (48-320 kg/m³) or more as open, porous structures.
Figure 1 is a schematic diagram of a mineral board manufacturing process in accordance with the present invention.
Figure 2 is a top view cross section of a part of the manufacturing line showing the modified forming box apparatus of Figure 1.
Figure 3 is a side view sectional of the same part of the manufacturing line as Figure 2.

The fiber material for use in the present invention may be any of the conventional mineral fibers prepared by attenuating a molten stream of basalt, slag, granite or other vitreous mineral constituent. The molten mineral is either drawn linearly through orifices, commonly referred to as textile fiber, or it is recovered tangentially off the face of a spinning cup or rotor, commonly referred to as wool fiber. Ceramic fibers and organic fibers such as polyamide fibers, acrylic fibers, polyester fibers, polyolefin fibers, cellulosic fibers and the like may also be used. Porous bonded mats or bails of fibers may be used as well as individual fibers to form the low density products of the invention. Expressed in terms of the dry solids content of the final panel product, the fiber constituent is suitably present in an amount up to about 95% by weight, and preferably amounts of about 30-45% are used. For reasons of convenience and economy, mineral wool is the preferred fiber material.

The lightweight mineral aggregate ingredient may be an inorganic lightweight aggregate of exfoliated or expanded volcanic glass origin. Such aggregate includes the well known expanded perlite, exfoliated vermiculite, exfoliated clay and the like products which are available in a variety of mesh sizes. Generally, mesh sizes smaller than 8 mesh (0.02 cm) are suitable, although this is not critical. Expanded perlite is the preferred aggregate for reasons for availability and economy. The amount of lightweight aggregate included may range up to about 85% or more on a dry weight basis in the final product. For the preferred low density products, the lightweight aggregate will generally constitute 30-65% of the product. Higher density versions of the products, having densities up to about 20 pounds per cubic foot (pcf) (320 kg/m³), or more, may be produced by employing higher density mineral aggregate such as stucco (calcium sulfate hemihydrate), gypsum, clays, limestone or the like.

The preferred binder used in the present invention may be any commercially available anionically-stabilized resin latex dispersion having polymeric materials containing active acrylic groups, acetate groups, or butadiene-styrene monomer, in various homopolymer, copolymer or mixtures thereof dispersions as functionally active, low temperature curing binder. It is generally preferred that the binder be curable at low temperatures (below about 100°C). For reasons of economy and availability, polyvinyl acetate (PVA) polymer binder is preferred and any of the commercially available PVA polymers containing an anionic particle charge emulsifier may be used, such as X-LINK latex or RESYN latex resins from National Starch and Chemicals Corporation, or SYNTHEMUL latex emulsions from Reichold Chemicals, Inc. Other anionic type synthetic resin latices such as vinylidene chloride, polyvinyl chloride, nitrile rubber, carboxylated acrylonitrile, polychloroprenes such as neoprene and the like or copolymers thereof may be used singly or in combination. The preferred anionic polyvinyl acetate latex binders are available in various concentrations having a full range of viscosities. These polymers are available in a pH range of about 1-8 although other pH ranges that do not adversely affect the mineral material may be used. They are commercially available in a range of particle sizes of about 0.1 to 2 micrometers and containing an anionic particle charge.

The binder latex solids may be present in the final product on a dry weight basis in an amount ranging from about 2% to about 35% depending upon the amount of mineral fiber, amount of lightweight aggregate, and the degree of stiffness and strength desired for the core of the final panel product. Generally, the amount of binder retained in the core of the final product will be about 99 weight % on a dry solids basis of the amount of binder added in formulating the furnish. In the method of this invention there is almost no binder loss. Heretofore, the high levels of resin loss in the methods used to make mineral fiber panels precluded the use of latex dispersions like polyvinyl acetates.

It has been found that mineral surfaces such as the mineral fibers and mineral aggregates disclosed herein carry a slight residual negative charge. In the present invention, the remaining essential ingredient is a coupling agent. A preferred material is a cationic flocculant that carries a residual positive charge. When it comes into contact with the negative charge on the mineral fiber or the mineral aggregate surface, an electrostatic interaction occurs which bonds the flocculant onto the mineral surface. The positive charge on the flocculant acts to couple or deposit the anionic surface of the resin latex binder to the cationic flocculant. In effect, the cationic flocculants of the types called for herein appear to be acting to couple the latex binder to the mineral fibers and/or the mineral aggregate particles without clump formation. A marked advantage of the present invention is the improvement in retention of binder solids in the final product when using an anionically stabilized synthetic polymeric latex binder and the proper amounts of cationic flocculant. With the cationic flocculant attracting and coupling the anionic binder latex onto the mineral surfaces, retention in the final product on a dry solids basis was improved from about 25-40% of the latex added without the cationic flocculant to over 95% retained when using the cationic flocculant in accordance with this invention. Suitable cationic flocculants for use in the present invention have a cationic charge, molecular weights of about 1-12 million, and at least about 5 mole percent cationic monomer.

The flocculant may be added in quite variable amounts and may range from about 0.5% to about 15% by weight based on the binder resin solids, although somewhat more or less may be used without further apparent advantage. Preferably about 2-4% polyacrylamide by weight based upon the weight of the binder resin solids is used. Depending upon the particular cationic flocculant and latex binder used to carry out the method of this invention, the amount of flocculant to achieve complete deposition of the active binder solids on the surface of the mineral materials may vary. Other suitable flocculants may include commercially available cationic polyamine, cationic guar, cationic cymene resin and cationic polyethoxylate materials having at least about 5 mole percent cationic monomer.

In normal practice under the present invention, the cationic flocculant will be diluted to about 1% by weight active ingredients prior to addition to the mineral fiber and/or mineral aggregate dispersion, although other concentrations may be effective. The concentration of flocculant present in the dispersion, however, does markedly affect the level of binder retention. A concentration between about 2% and about 4% based on the weight of the binder solids generally provides excellent retention.

Optionally, one or more woven or random weave (nonwoven) fiber web cover sheets, such as glass fiber scrim, may be applied to the mineral fiber/aggregate core during manufacture. When used, it is preferred to utilize a porous nonwoven scrim fabric, such as that available under the designation of "Battery" type scrim, having a weight of about 0.4-2.5 pounds (.2-1 kg) per hundred square feet (9 m²) of scrim. If a cover scrim is utilized, it may be necessary to provide an additional binder application as by spraying or roll coating the scrim with resin latex binder before the scrim is applied to the core in order to provide additional adherence between the core and scrim.

### EXAMPLE 1

A dilute dispersion of about 3% by weight solids consistency was formed containing approximately 53% expanded perlite, 35% mineral wool that had not been treated to remove contained shot, and 12% by solids of an anionically stabilized polyvinyl acetate latex. The formulation was mixed to homogeneity over 1-3 minutes and then a 2% cationic polyacrylamide solution was added to provide approximately 1% polyacrylamide based on the total weight of solids of the panel product on a dry weight basis. Upon addition of the polyacrylamide solution, the cloudy dispersion of the expanded perlite, mineral wool and polyvinyl acetate became clear, and it was observed that the mineral wool fibers had become coated with the polyvinyl acetate particles,

### EXAMPLE 2

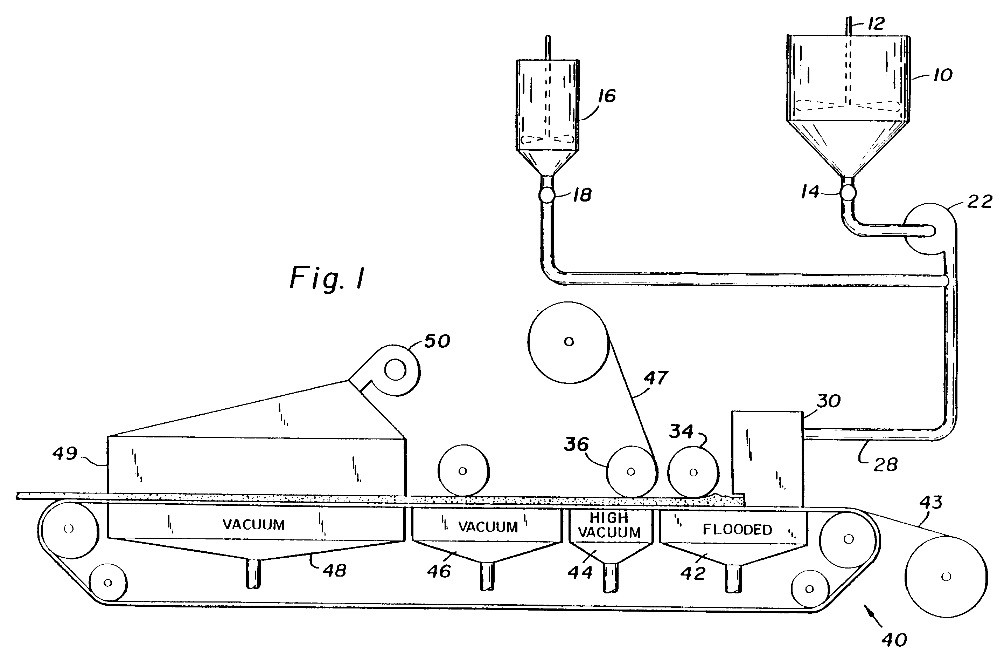

The following Example should be read with reference to Figure 1 which shows a schematic diagram of a method in accordance with the present invention.

A dilute mineral fiber furnish was prepared by first charging to water in primary mix tank 10 a quantity of mineral wool, then an anionically-stabilized polyvinyl acetate binder latex having a viscosity of 50-200 centipoises (cps) (0.5-2P) at 25°, pH of 4.5 and a glass transition temperature (Tg) of 33°C, and finally expanded perlite. This furnish was mixed by a motor-driven impeller 12 for 2-4 minutes to achieve homogeneity. Flows from mix tank 10 were proportioned by valve 14 to provide a furnish of about 3% by weight solids concentration, with the individual ingredients proportioned to each other on a dry solids basis of about 44% mineral wool, 44% expanded perlite, and about 12% polyvinyl acetate latex active solids. A cationic polyacrylamide having a molecular weight between 8 and 12 million, viscosity of about 1000 cps (10 P) and 30 mole percent cationic monomer was added to secondary mix tank 16 and metered into the furnish via valve 18 at a rate to provide the polyacrylamide proportioned to the other ingredients on a dry solids basis of about 0.4% (and proportioned to the resin latex binder on a dry basis of 2.6% by weight of latex solids).

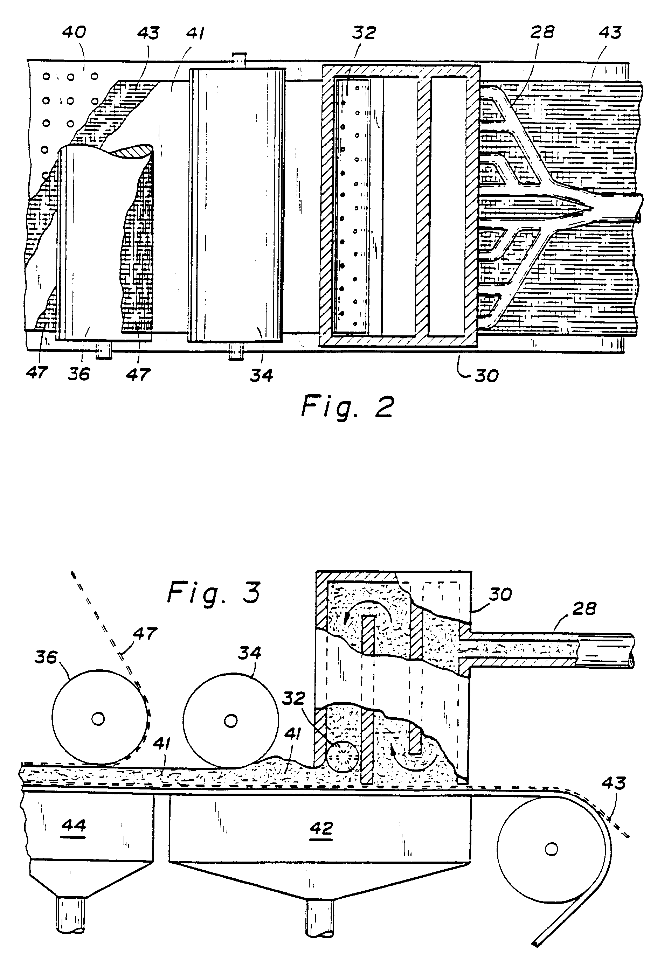

A pump 22 transferred the furnish to a modified flow head box 30 above a conventional moving foraminous wire screen of a mat forming machine, hereinafter and commonly referred to as the wire 40. The functions of the modified head box 30 were to allow the furnish to consolidate and mature to provide for the ionic coupling of the polyvinyl acetate binder solids to the mineral wool and perlite as the furnish passed through the branched feed pipe 28 (shown more particularly in FIGURE 2) and through the convoluting channel course within the modified head box 30 (shown more particularly in Figure 3) and onto wire 40 as layer of furnish solids mass 41. By providing a perforated roll 32 having multiple passageways through its diameter for fluid flow located within head box 30 and also smoothing roller 34 above wire 40 just after the mass 41 is deposited upon wire 40, a velocity transition zone to a first flooded section 42 on wire 40 was established to allow for further ionic coupling of the solids in mass 41 as an evenly spread layer of furnish solids in open, highly voided, entangled mass having water in the interstitial spaces of the entangled mass.

A continuous scrim bottom cover sheet 43, such as of nonwoven Battery scrim having a weight of about 0.8-2 pounds (.4-.9 kg) per 100 square feet (9 m²) of scrim, was laid above wire 40 before the mass 41 cascaded out of box 30 onto wire 40. A similar scrim top cover sheet 47 was overlaid at the smoothing roller 36. By feeding the top sheet 47 and bottom sheet 43 as shown in Figure 3, an intimate contacting of the cover sheets with the mass 41 was provided.

The core mass 41 cascading out of head box 30 was deposited upon and then floated through water flooded section 42 of the wire 40 for a few seconds before encountering the vacuum sections 44,46, and 48. In high vacuum section 44, a partial vacuum pressure differential equivalent to about 8-20 inches of mercury (27016-67540 Pa) was applied in brief pulses across the surface of the core 41 in order to begin stripping water from the wet mass without any substantial collapsing of the open, voided structure which had been formed in flooded section 42. A lessened pressure differential equivalent to about 5-70 (1245 - 17430 Pa), and preferably about 14 (3486 Pa), inches of water was maintained across the surface of mass 41 in vacuum section 46, and in section 48, the same vacuum pressure differential was augmented with positive pressure dry air flow through enclosure 49 from blower 50. The blower 50 provided dry heated air to assist continued stripping of water and drying of the wet mass 41. The blower was operated to provide air through mass 41 at a volume velocity of about 50-350 (0.2-.16m³/s) and preferably about 300 cubic feet per minute (.14m³/s) of air per one square foot (92 sq.cm) surface with the air at a temperature of about 37-180°C. The time for a segment of core 41 mass to pass through section 48 was varied considerably, generally averaging 1-2 minutes, to produce a panel of nominal ½ inch (1.27cm) thickness. The panel had a core of uniform small-sized voids averaging about 1/64th (.04cm) inch diameter, a density of 6.5 pounds per cubic foot (104 kg/m³), and was quite strong although flexible with the two cover sheets in place. Testing the core alone after stripping off the scrim cover sheets gave a modulus of rupture of about 45 pounds per square inch (.3 Pa), while testing with the cover sheets gave 150 pounds per square inch (1 Pa).

In further evaluations, the amount of perlite was varied between about 26% and about 43%. The amount of mineral wool used was also varied in a manner such that the sum of the perlite and mineral wool accounted for 88% by weight of the total solids of the furnish. It was found that increases in the perlite-to-mineral wool ratio yielded in a linear fashion a progressively lighter, weaker and more flexible core. On a weight basis, the strength of the core remained relatively constant when these values were corrected for the changed density of the different samples. It was also found that about 2% of the perlite processed became broken and settled out onto the bottom facing sheet.

### EXAMPLE 3

The procedure of Example 2 was repeated with proportioning of the ingredients to each other on a dry weight solids basis of about 52% perlite, about 35% mineral wool, about 12.5% polyvinyl acetate and about 0.45% polyacrylamide. Different cationic polyacrylamide materials were used as follows:
(1) Cationic polyacrylamide augmented with considerable monomeric material having a molecular weight of about 1 million, about 30 mole percent cationic monomer and a viscosity of 1050 centipoises (10.5 P) at 25°C;
(2) Cationic polyacrylamide having a molecular weight of 4-6 million, about 15 mole percent monomer, and a viscosity of 1400 centipoises (14 P) at 25°C;
(3) Cationic polyacrylamide having a molecular weight of 8-12 million, about 35 mole percent monomer, and a viscosity of 100 centipoises (1 P) at 25°C. Each of the different cationic polyacrylamides performed satisfactorily with results equivalent to those obtained in Example 2.

In still further evaluations, the amount of polyacrylamide in the first set of evaluations in this Example was varied from 0.72% to 8.6% based on the dry active solids of the binder. All levels performed satisfactorily. As the amount increased to 3%, the percentage of polyvinyl acetate binder retained also increased. At levels above 3% for the particular polyacrylamide used, the percentage of binder retained declined slightly. Modulus of rupture increased linearly with the amount of binder retained.

### EXAMPLE 4

In another evaluation following the procedure of Example 2, the following furnish was prepared:
64.78% mineral wool
25.91% calcium sulfate hemihydrate
9.07% anionically stabilized carboxylated styreneacrylic resin latex binder having a Tg of 100°C
0.16% cationic polyacrylamide of 8-12 million molecular weight and mole 30% cationic monomer, and
9.08% lauryl alkyl sulfate anionic surfactant.

The resulting panels had a density of 16.88 pounds per cubic foot (270 kg/m³) and tested, with the top cover sheet removed, to a modulus of rupture of 95.9 pounds per square inch (.7 Pa) and modulus of elasticity of 10,131 pounds per square inch (70 Pa). Further panels were made applying only a bottom layer scrim sheet during manufacture, imparting a textured surface to the uncovered face after removing the panels from the drier 49 after approximately two minutes, and passing the panels for completion of drying in a conventional manner by passing heated dry air over the surfaces of the panel in a convection oven rather than through the interstices within the panel. The physical properties of this panel approximated those of the other panels in this Example tested after removal of the top cover sheet.

### EXAMPLE 5

In still further evaluations, a panel was made in accordance with Example 2 except that, in a first series of evaluations, the cationic polyacrylamide was first added only in mix tank 10 and then added only in tank 16. The addition of polyacrylamide to mix tank 10 alone resulted in a 45% loss of strength in the dried panels.

In a second evaluation a cationic polyacrylamide was added from both mix tank 10 and mix tank 16. Specifically, 6.25% of the polyvinyl acetate binder of Example 2 and 0.2% of the cationic polyacrylamide of Example 2 were added to mix tank 10 with the other ingredients in proportions as in Example 2. After thorough mixing and flocculation in mix tank 10, then 6.25% of anionically stabilized, carboxylated, styrene-acrylic resin latex having a high percentage of styrene, a Tg of 100°C, resin solids average particle size of 1.4-1.7 micrometers, and a pH of 5.0, was added to mix 10. The furnish was passed to the wire 40, with further addition of 0.2% polyacrylamide now from secondary mix tank 16 metered into this furnish. The resultant panels exhibited significantly higher strength and the ability to withstand sagging from humidified conditions in comparison to the panels of Example 2.

From the foregoing, it is apparent that the present invention provides a method for manufacturing structural mineral products of widely varying densities and uses. Various panel thicknesses from about 1/8 inch through 2 inches (0.3 - 5 cm) may be formed. Very lightweight products having a density ranging from about 3-10 pounds per cubic (48-160 k/m³) foot may be formed from a dilute furnish preferably of about 20-65% mineral fiber and about 20-70% expanded lightweight aggregate. Denser products up to about 20 pounds per cubic foot (320 kg/m³) or more may be formed with heavier aggregate such as gypsum. An all mineral fiber or an all lightweight aggregate panel may be formed. Paper and other cellulosic fiber may supplant or replace the mineral or polymeric fibers preferred in the practice of the present invention. Starch or other organic binder may at least partly supplant the preferred binders without departing from the scope of the present invention. Other ingredients may be present in the furnish such as dyes, pigments, antioxidants water repellents, fire retardants and the like. Conventional steps for various particular manufactured articles such as cutting, trimming, shaping, adding slots, tabs, and the like for ceiling grid suspension or other mountings; and painting, texturing surface overlaying and the like decorating features may be performed.

## Claims

1. A method for manufacturing a lightweight structural mineral panel having a thickness in the range about 0.3cms - 5.0 cms on a moving foraminous support wire which comprises the steps of:
A. Forming a dilute furnish in water of anionically stabilized resin latex and a mineral material selected from the group consisting of mineral fiber and mixtures of mineral fiber and mineral aggregate whereby said furnish contains by weight (dry solids) mineral fiber in the range 30 - 95%;
B. Mixing said furnish and from 0.5 to 15% by weight of resin latex solids of a cationic coupling agent sufficient to coat the mineral material and effectively couple the anionically stabilized resin latex onto the mineral surfaces;
C. Depositing the furnish on a water flooded section of the support wire and forming an open, wet entangled structure of mineral material and binder solids having water in intersticial spaces of the entangled structure;
D. Applying a vacuum pressure differential equivalent to 8 - 20 inches of mercury (27016 - 67540 Pa) to the wet structure sufficient to strip water from the mass without collapse of the open entangled structure of the wet mass;
E. Stripping additional water from the wet mass without collapse of the open entangled structure by applying further vacuum pressure differential equivalent to 5-70 inches of water (1245 - 1730 Pa) to the wet mass; and
F. Drying the wet mass by passing heated dry air through the mass without collapse of the open, entangled structure.

2. A method according to Claim 1, characterised in that, in Step C, the furnish is deposited upon a porous fiber scrim cover sheet which overlays the support wire.

3. A method according to Claim 2, characterised in that a second porous fiber scrim cover sheet is placed over the furnish.

4. A method according to Claim 1, characterised in that, in Step A, said fiber is mineral wool.

5. A method according to Claim 1, characterised in that, in Step A, said latex particles are anionically stabilized polyvinyl acetate.

6. A method according to any of Claims 1 - 5, characterised in that, in Step B, said coupling agent comprises 2-4% based upon the weight of resin of cationic polyacrylamide having at least 5 percent mole cationic monomer.

7. A method according to any preceding claim, characterised in that, in Step D, the vacuum is applied to the wet mass in brief pulses.

8. A method according to any preceding claim, characterised in that, in Step F, heated dry air is passed through the mass at a rate of 50-350 cubic feet per minute (0.2-.16m³/s) of air per square foot (929 sq. cm) of mass surface area.

9. A method according to Claim 1, characterised in that the cationic coupling agent is a polymeric flocculant.

10. A method according to Claim 4, characterised in that the quantity of cationic flocculant is 0.16, 0.2, 0.4, 0.45 or 1% by dry weight of the total binder resin solids.

11. A method according to Claim 10, characterised in that the quantity of cationic flocculant is from 2% to 4% solids based on the weight of the latex resin solids.

12. A method according to any of claims 9 - 11, characterised in that the cationic polymeric flocculant is a polyacrylamide.

13. A method for manufacturing a lightweight structural mineral panel having a thickness in the range about 0.3 cms - 5.0 cms on a moving foraminous support wire which comprises the steps of:
a) forming a dilute furnish in water of anionically stabilized resin latex and a mineral fiber material whereby said furnish contains by weight (dry solids) mineral fiber in the range 30 - 95%;
b) mixing said furnish and from 0.5 to 15% by weight of resin latex solids of a cationic coupling agent sufficient to coat the mineral fiber material and effectively couple the anionically stabilized resin latex onto the mineral fiber surfaces;
c) depositing the furnish on a water flooded section of the support wire and forming an open, wet entangled structure of mineral fiber and latex resin binder solids having water in the intersticial spaces of the entangled structure;
d) applying a vacuum pressure differential equivalent to about 8-20 inches of Hg (27016-67450 Pa) to the wet structure sufficient to strip water from the mass without collapse of the open entangled structure of the wet mass; and
e) drying the wet mass by passing heated dry air through the mass and applying a vacuum pressure differential thereto without collapse of the open, entangled structure.

## Patentansprüche

1. Verfahren zur Herstellung einer leichten Mineralbauplatte mit einer Dicke im Bereich von ungefähr 0,3 bis 5,0 cm auf einem sich bewegenden, mit Löchern durchsetzten Stützdraht, das folgende Schritte umfaßt:
A. Bildung eines verdünnten Eintrags in Wasser aus anionisch stabilisiertem Harzlatex und einem aus der Mineralfasern und Mischungen aus Mineralfasern und Mineralaggregat umfassenden Gruppe ausgewählten Mineralmaterial, wobei der Eintrag Mineralfasern (trockene Feststoffe) im Bereich von 30 bis 95 Gew.-% enthält;
B. Mischen des Eintrags mit einem kationischen Haftvermittler in einer Menge von 0,5 bis 15 Gew.-% der Harzlatex-Feststoffe, die ausreicht, um das Mineralmaterial zu beschichten und das anionisch stabilisierte Harzlatex effektiv mit den Mineralflächen zu verbinden;
C. Ablegen des Eintrags auf einem wasserüberfluteten Abschnitt des Stützdrahts und Bilden eines offenen, nassen, verknäulten Gefüges aus Mineralmaterial und Bindemittelfeststoffen, wobei das verknäulte Gefüge in seinen Zwischenräumen Wasser aufweist;
D. Aufbringen eines Vakuum-Druckdifferentials auf das nasse Gefüge, das 8 - 20 Inches Quecksilber (27016 - 67540 Pa) entspricht und ausreicht, um Wasser aus der nassen Masse ohne Herbeiführen eines Zusammenfallens des offenen verknäulten Gefüges der nassen Masse zu entfernen;
E. Entfernen von zusätzlichem Wasser aus der nassen Masse ohne Herbeiführen eines Zusammenfallens des offenen, verknäulten Gefüges durch Aufbringen eines weiteren Vakuum-Druckdifferentials auf die nasse Masse, das 5 - 70 Inches Wasser (1245 - 17430 Pa) entspricht; und
F. Trocknen der nassen Masse mittels Durchleiten von trockener Heißluft durch die Masse ohne Herbeiführen eines Zusammenfallens des offenen, verknäulten Gefüges.

2. Verfahren nach Anspruch 1, dadurch gekennzeichnet, daß in Schritt C der Eintrag auf einem porösen Fasermull-Abdeckgelege, welches über dem Stützdraht liegt, abgelegt wird.

3. Verfahren nach Anspruch 2, dadurch gekennzeichnet, daß ein zweites poröses Fasermull-Abdeckgelege über dem Eintrag abgelegt wird.

4. Verfahren nach Anspruch 1, dadurch gekennzeichnet, daß es sich in Schritt A bei der Faser um Mineralwolle handelt.

5. Verfahren nach Anspruch 1, dadurch gekennzeichnet, daß es sich in Schritt A bei den Latexteilchen um anionisch stabilisiertes Polyvinylacetat handelt.

6. Verfahren nach einem der Ansprüche 1 bis 5, dadurch gekennzeichnet, daß in Schritt B der Haftvermittler 2 bis 4 Gew-%, basierend auf dem Gewicht des Harzes, an kationischem Polyacrylamid mit wenigstens 5 Prozent Mol kationischem Monomer umfaßt.

7. Verfahren nach einem der vorhergehenden Ansprüche, dadurch gekennzeichnet, daß in Schritt D das Vakuum in kurzen Impulsen auf die nasse Masse aufgebracht wird.

8. Verfahren nach einem der vorhergehenden Ansprüche, dadurch gekennzeichnet, daß in Schritt F die trockene Heißluft bei einer Rate von 50 bis 350 Kubikfuß pro Minute (0,2 bis 0,16m³/s) Luft pro Quadratfuß (929 cm²) der Massenoberfläche durch die Masse geleitet wird.

9. Verfahren nach Anspruch 1, dadurch gekennzeichnet, daß es sich bei dem kationischen Haftvermittler um ein polymeres Flockungsmittel handelt.

10. Verfahren nach Anspruch 4, dadurch gekennzeichnet, daß die Menge an kationischem Flockungsmittel 0,16, 0,2, 0,4, 0,45 oder 1 % pro Trockengewicht der gesamten Harzbindemittel-Feststoffe beträgt.

11. Verfahren nach Anspruch 10, dadurch gekennzeichnet, daß die Menge an kationischem Flockungsmittel 2 bis 4% an Feststoffen, basierend auf dem Gewicht der Latexharz-Festmasse, umfaßt.

12. Verfahren nach einem der Ansprüche 9 bis 11, dadurch gekennzeichnet, daß es sich bei dem kationischen polymeren Flockungsmittel um ein Polyacrylamid handelt.

13. Verfahren zur Herstellung einer leichten Mineralbauplatte mit einer Dicke im Bereich von ungefähr 0,3 bis 5,0 cm auf einem sich bewegenden, mit Löchern durchsetzten Stützdraht, das folgende Schritte umfaßt:
a) Bildung eines verdünnten Eintrags in Wasser aus anionisch stabilisiertem Harzlatex und einem Mineralfasermaterial, wobei der Eintrag Mineralfasern (trockene Feststoffe) im Bereich von 30 bis 95 Gew.-% enthält;
b) Mischen des Eintrags mit einem kationischen Haftvermittler in einer Menge von 0,5 bis 15 Gew.-% der Harzlatex-Feststoffe, die ausreicht, um das Mineralfasermaterial zu beschichten und das anionisch stabilisierte Harzlatex effektiv mit den Mineralfaserflächen zu verbinden;
c) Ablegen des Eintrags auf einem wasserüberfluteten Abschnitt des Stützdrahts und Bilden eines offenen, nassen, verknäulten Gefüges aus Mineralfaser und Latexharz-Bindemittelfeststoffen, wobei das verknäulte Gefüge in seinen Zwischenräumen Wasser aufweist;
d) Aufbringen eines Vakuum-Druckdifferentials auf das nasse Gefüge, das ungefähr 8 - 20 Inches Hg (27016 bis 67450 Pa) entspricht und ausreicht, um Wasser aus der Masse ohne Herbeiführen eines Zusammenfallens des offenen verknäulten Gefüges der nassen Masse zu entfernen; und
e) Trocknen der nassen Masse mittels Durchleiten von trockener Heißluft durch die Masse und Aufbringen eines Vakuum-Druckdifferentials auf diese ohne Herbeiführen eines Zusammenfallens des offenen, verknäulten Gefüges.

## Revendications

1. Procédé de fabrication d'un panneau de construction minéral de poids léger ayant une épaisseur dans le domaine allant d'environ 0,3 cm à 5,0 cm sur une toile sans fin mobile percée d'ouvertures, qui comprend les étapes suivantes :
A. former une composition diluée dans de l'eau à base de latex résineux stabilisé anioniquement et d'une matière minérale choisie parmi le groupe comprenant la fibre minérale et des mélanges de fibre minérale et d'agrégat minéral grâce à quoi ladite composition contient une quantité de fibre minérale (en solides secs) dans le domaine de 30 à 95% en poids ;
B. mélanger ladite composition et de 0,5% à 15% en poids de solides de latex résineux d'un agent de couplage cationique suffisant pour enduire la matière minérale et coupler de manière efficace le latex résineux stabilisé anioniquement sur les surfaces minérales ;
C. déposer la composition sur une section noyée d'eau de la toile sans fin et former une structure ouverte humide et emmêlée de matière minérale et de solides de liant, présentant de l'eau dans des espaces interstitiels de la structure emmêlée ;
D. appliquer un différentiel de pression de vide équivalent à 8 - 20 pouces de mercure (27016 - 67540 Pa) à la structure humide suffisant pour éliminer l'eau de la masse sans applatir la structure emmêlée ouverte de la masse humide ;
E. éliminer de l'eau supplémentaire de la masse humide sans applatir la structure emmêlée ouverte en appliquant un différentiel de pression de vide supplémentaire équivalent à 5 - 70 pouces d'eau (1245 - 17430 Pa) à la masse humide ; et
F. sécher la masse humide en faisant passer de l'air sec réchauffé à travers la masse sans applatir la structure emmêlée ouverte.

2. Procédé selon la revendication 1, caractérisé en ce qu'à l'étape C, on dépose la composition sur une feuille de recouvrement en mousseline en fibre poreuse qui recouvre la toile sans fin.

3. Procédé selon la revendication 2, caractérisé en ce que l'on place une seconde feuille de recouvrement en mousseline en fibre poreuse sur la composition.

4. Procédé selon la revendication 1, caractérisé en ce qu'à l'étape A, ladite fibre est de la laine minérale.

5. Procédé selon la revendication 1, caractérisé en ce qu'à l'étape A, lesdites particules de latex sont du polyvinyleacétate stabilisé anioniquement.

6. Procédé selon l'une quelconque des revendications 1 - 5, caractérisé en ce qu'à l'étape B, ledit agent de couplage comprend 2-4% de polyacrylamide cationique en se basant sur le poids de résine, ayant au moins 5 pourcent en moles de monomère cationique.

7. Procédé selon une revendication précédente quelconque, caractérisé en ce qu'à l'étape D, on applique le vide à la masse humide en impulsions brèves.

8. Procédé selon une revendication précédente quelconque, caractérisé en ce qu'à l'étape F, on fait passer de l'air sec réchauffé à travers la masse à un débit de 50-350 pieds cubiques par minute (0,2-,16 m³/s) d'air par pied carré (929 cm carré) de superficie de la masse.

9. Procédé selon la revendication 1, caractérisé en ce que l'agent de couplage cationique est un floculant polymère.

10. Procédé selon la revendication 4, caractérisé en ce que la quantité de floculant cationique est 0,16, 0,2, 0,4, 0,45 ou 1% en poids sec du total de solides de résine de liant.

11. Procédé selon la revendication 10, caractérisé en ce que la quantité de floculant cationique est de 2% à 4% de solides en se basant sur le poids des solides de latex résineux.

12. Procédé selon l'une quelconque des revendications 9 - 11, caractérisé en ce que le floculant polymère cationique est un polyacrylamide.

13. Procédé de fabrication d'un panneau de construction minéral de poids léger ayant une épaisseur dans le domaine allant d'environ 0,3 cm - 5,0 cm sur une toile sans fin mobile percée d'ouvertures, qui comprend les étapes suivantes :
a. former une composition diluée dans de l'eau à base de latex résineux stabilisé anioniquement et d'une matière fibreuse minérale grâce à quoi ladite composition contient une quantité de fibre minérale (en solides secs) dans le domaine de 30 - 95% en poids ;
b. mélanger ladite composition et de 0,5% à 15% en poids de solides de latex résineux d'un agent de couplage cationique suffisant pour enduire la matière fibreuse minérale et coupler de manière efficace le latex résineux stabilisé anioniquement sur les surfaces des fibres minérales ;
c. déposer la composition sur une section noyée d'eau de la toile sans fin et former une structure ouverte humide et emmêlée de fibre minérale et de solides de liant en résine de latex, présentant de l'eau dans des espaces interstitiels de la structure emmêlée ;
d. appliquer un différentiel de pression de vide équivalent à environ 8 - 20 pouces de Hg (27016 - 67450 Pa) à la structure humide suffisant pour éliminer l'eau de la masse sans applatir la structure emmêlée ouverte de la masse humide ; et
e. sécher la masse humide en faisant passer de l'air sec réchauffé à travers la masse et appliquer un différentiel de pression de vide à celle-ci sans applatir la structure emmêlée ouverte.
